# EUROPEAN PATENT APPLICATION

(11) **EP 3 466 909 A1**
(43) Date of publication of application: **10.04.2019**
(21) Application number: 17806352.5
(22) Date of filing: 15.05.2017
(51) Int. Cl.: C04B 41/85, B01D 53/94, B01J 35/04, B01J 37/02, B05D 1/28, B05D 7/00

(54) **METHOD FOR PRODUCING CYLINDRICAL HONEYCOMB STRUCTURE WITH FILM AND METHOD FOR PRODUCING CATALYST**

(30) Priority: 31.05.2016 JP 2016108742; 18.08.2016 JP 2016160300; 18.08.2016 JP 2016160301
(71) Applicant: N.E. Chemcat Corporation, Tokyo 105-6124 (JP)
(72) Inventor: YAMADA, Takashi, Tokyo 105-6124 (JP); ISHIKAWA, Shingo, Tokyo 105-6124 (JP); SEKIYAMA, Kazuhiro, Tokyo 105-6124 (JP); OISHI, Ryoma, Tokyo 105-6124 (JP); TAKAHASHI, Yoshinori, Tokyo 105-6124 (JP)
(74) Representative: Müller-Boré & Partner Patentanwälte PartG mbB
(86) International application number: PCT/JP2017/018172
(87) International publication number: WO 2017/208794

(57) **Abstract**

Provided is a method of producing a cylindrical honeycomb structure with film that is able to prevent catalyst slurry from leaching out to an outer portion thereof during wash coating and is able to ensure ventilation of the outer portion when used as a GPF, the method enabling production in a stable manner at low cost on a mass-production basis. The present invention is a method of producing a film-coated cylindrical honeycomb structure formed with a coating liquid on an outer portion of a cylindrical honeycomb structure including partition walls and the outer portion, the partition walls forming a plurality of cells, the outer portion serving as a circumferential side. In the method, the cylindrical honeycomb structure is mounted between at least two rollers such that the circumferential side of the cylindrical honeycomb structure contacts with circumferential sides of the rollers, the coating liquid supplied from an application part is deposited on the cylindrical honeycomb structure while being rotated, and then the deposited coating liquid is dried or cured to form the film on the outer portion.

## Description

### Technical Field

The present invention relates to a method of producing a film-coated cylindrical honeycomb structure and a method of producing a catalyst, and more specifically, to a method of producing a film-coated cylindrical honeycomb structure that is able
to prevent catalyst slurry from leaching out to an outer portion thereof during wash coating and is able to be produced in a stable manner, and a method of producing a catalyst in which the honeycomb structure is used as a catalyst support for a gasoline particulate filter (GPF).

### Background Art

Automobile exhaust gas includes various kinds of a harmful substances, such as nitrogen oxides (NOx), hydrocarbon (HC) and carbon oxide (CO), which derive from unburned fuel, and various kinds of methods to remove those substances have long been developed and implemented.

Exhaust gas sources include gasoline-powered cars and diesel-powered cars mounted with a diesel engine. For exhaust gas from diesel-powered cars, in addition to NOx, HC, and CO, particulate matter (PM) is also known, and a diesel particulate filter (DPF) has widely been used as an apparatus for removing PM.

DPF is a general name of filtering apparatuses for exhaust gas purification called a wall-flow honeycomb filter, and includes a plurality of cells partitioned by partition walls from an inlet end to an outlet end of each of the cells. In the honeycomb structure, the cells are alternately plugged at the inlet end and the outlet end thereof. The partition walls defining the cells each have air permeability, which enable PM to be filtered out from exhaust gas, thereby preventing PM from being exhausted to the air.

PM filtered out from exhaust gas through the DPF is continuously deposited on the DPF, whereby clogging occurs. To prevent this clogging, PM deposited on the DPF is burned by using exhaust gas heat or injecting fuel to an engine combustion chamber or exhaust gas to regenerate the DPF. To facilitate such regeneration, the partition walls of the cells of the DPF are coated with a catalyst component in some cases, and the DPF coated with the catalyst component may be known as a catalyzed soot filter (CSF). The applicant also develops this system incorporating a catalyst (for example, see Patent Literature 1).

Conventionally, removal of PM in exhaust gas has been demanded mostly for diesel-powered cars fueled by diesel oil, which is less combustible. By contrast, the removal of PM has not been regarded as an important environmental issue with gasoline-powered cars fueled by gasoline, which generates a smaller amount of PM.

With growing concern with the environmental issues these days, however, restriction on harmful substances in exhaust gas has become stricter, and the amount of PM exhausted from gasoline-powered cars has also come to be restricted. Especially these years, there has been growing concern over fuel efficiency in the market, and the mainstream of gasoline engines has shifted to gasoline direct injection engines, which directly inject to supply gasoline to a combustion chamber under strict control. However, in this gasoline direct injection engines, inside the combustion chamber is in a combustion state while part of the gasoline directly injected to the combustion chamber is maintained in a form of particles, so that incomplete combustion attributed to particle-like fuel occurs, and in some cases, a larger amount of PM is generated than from conventional gasoline-powered cars using an intake manifold from which a mixed gas including fuel and the air is supplied. All things considered, needs for restriction on exhaust gas is becoming more likely.

It is expected that the removal of PM from exhaust gas of gasoline-powered cars also uses a wall-flow honeycomb filter similarly to the DPF for diesel-powered cars; however, for the reasons as follows, due to characteristics of gasoline-powered cars, it is not easy for gasoline-powered cars to use the same DPF as that for diesel-powered cars.

First, one of major differences between gasoline-powered cars and diesel-powered cars is difference in exhaust gas velocity therebetween. A diesel engine injects fuel to the air compressed by high pressure, and causes the fuel to ignite with the pressure effect to make explosion, from which kinetic energy is taken out. Thus, diesel engines, which use a high compression state, are efficient engines, but because diesel engines need to create a high compression state, the engine rotation speed of diesel engines is lower than that of gasoline-powered cars, and accordingly the exhaust-gas velocity of diesel-powered cars is lower than that of gasoline-powered cars. The DPF is designed for cars with lower exhaust gas velocity, and does not need to provide permeability to a circumferential side of the honeycomb structure (hereinafter it may be called "outer portion"); and thus conventionally, to enhance the honeycomb structure, the outer portion is formed of a dense high-strength ceramics material. Moreover, in many cases, diesel-powered cars have lower engine rotation speed, and the temperature of diesel-car exhaust gas during driving is lower than that of gasoline-car exhaust gas.

Exhaust gas purification for gasoline engines, however, is different from that for diesel engines in the following condition. Gasoline engines cause a spark plug to ignite air-fuel mixed gas, and have a smaller compression ratio than general diesel engines. Thus, gasoline engines enable an engine thereof to operate at high rotation to provide high power. Moreover, based on the today's market demand for improved fuel consumption, high-power engines also tend to be downsized aiming for weight reduction of vehicles. For a small engine to provide high power, it is necessary to operate the engine at high rotation and supply a large quantity of air to the inside of a cylinder with a supercharger. When the engine is operated at high rotation or in a supercharging state, the velocity of exhaust gas from the engine becomes faster. Using the conventional DPF for diesel-powered cars for the engine with fast exhaust gas velocity increases the back pressure of the engine, which obstructs improvement of the engine power thereof.

Furthermore, if the outer portion of the honeycomb structure has a wall made of another material, there may be a concern over a crack occurring due to difference in the coefficient of thermal expansion in a catalyst for gasoline engines, the temperature of which during driving is higher than that of diesel engines. Thus, the outer portion and the partition walls may preferably be integrally molded.

Consequently, for a filter for removing PM from exhaust gas from gasoline engines, a honeycomb filter having an outer portion that has permeability, instead of having a dense outer portion that has no permeability to obtain more strength like in the DPF, has been studied. Such a PM filter for gasoline engines may be also called as a gasoline particulate filter (GPF) (refer to Patent Literature 2, for example).

Using the GPF enables removal of PM from exhaust gas without causing the back pressure to easily increase, but at the same time, manufacturing the GPF has led to a new challenge involving a catalyst.

Generally, exhaust gas purification for gasoline engines uses a honeycomb structure made to have a catalytic function with a three-way catalyst (TWC) containing components of noble metals such as platinum, palladium, and rhodium, to remove simultaneously NOx, HC, and CO. For conventional TWC, a honeycomb structure in which both end faces of a cell are open, which is called flow-through honeycomb, has been used, as opposed to a honeycomb structure with both end faces thereof plugged to each other like in the DPF, and the partition walls of the cells of the flow-through honeycomb are coated with the catalyst component. This flow-through honeycomb provides less increase in the back pressure, and is suitable for use in exhaust gas purification for gasoline engines with high velocity.

When the flow-through honeycomb or the DPF is made to have a catalytic function with a catalyst composition such as TWC, a manufacturing method generally known as a wash coating method is applied (refer to Patent Literature 3, for example). Various kinds of methods have been developed and carried out for wash coating, the basic principle of which comprises "step to supply a catalyst component slurry inside of a honeycomb cell" and "step to discharge the supplied slurry in the cell with the air pressure". In the "step to discharge the supplied slurry in the cell with the air pressure", it is possible to remove excess slurry, without particular trouble, from the flow-through honeycomb. The conventional DPF, which has a dense outer portion thereon, is also able to remove excess slurry without trouble similarly.

However, the GPF has a feature in which the back pressure is prevented from increasing, and thus the outer portion of the GPF needs to be formed of porous material having permeability as is the case with the partition walls of the cells to enable exhaustion also from the outer portion. However, the ends of the honeycomb cell are plugged, and the plugged parts are obstructive in "step to discharge the supplied slurry in the cell with the air pressure" during wash coating, and thus slurry discharged with the air pressure leaches out from the outer portion.

Slurry thus leaching out from the outer portion not only contaminates a wash coating apparatus but also spoils the noble metals. Moreover, if the noble metal components for an automotive catalyst, which are strictly managed in ingredient amount for cost savings, leach out from the outer portion, it makes it difficult to manage the ingredient amount to cause unevenness of the ingredient amount. This unevenness in the ingredient amount is regarded as a failure in production. Furthermore, performance of the automotive catalyst is industrially accomplished only when the ingredient amount is properly managed. Slurry leaching out to the outer portion makes it difficult to manage the amount of catalyst carried on each honeycomb structure during mass production, and thus makes it extremely difficult to provide stable exhaust gas purification.

A suitable means to be able to prevent slurry from leaching out to a honeycomb outside portion has been thus desired for the GPF. Moreover, the means is also desired that has no disadvantageous effect such as pressure loss on a product after application of a catalyst, that is, the means is able to provide competing goals. In addition, the means desirably be able to be applied in a stable manner at low cost on a mass-production basis.

To provide such means, it is considered that the outer portion has a film formed thereon to prevent a liquid containing a catalyst component from leaching out to a periphery of the honeycomb filter. Patent Literature 4, for example, discloses that ink-jet marking with a material containing inorganic filler is performed for catalyst identification.

### Citation List

### Patent Literature

[Patent Literature 1] Re-published Japanese Translation of PCT Application No. 2013-172128
[Patent Literature 2] Publication of Japanese Translation of PCT Application No. 2015-528868
[Patent Literature 3] Publication of Japanese Translation of PCT Application No. 2003-506211
[Patent Literature 4] Re-published Japanese Translation of PCT Application No. 2003-078064

### Summary of Invention

### Problems to be Solved by the Invention

Patent Literature 4, however, discloses that inorganic filler included in a material closes a pore of an outer portion to increase pressure loss, and the inorganic filler is not able to be used for honeycomb structure to which TWC material is applied, especially honeycomb structure of the GPF. That is, the GPF needs such material that is able to prevent slurry from leaching out to the outer portion during implementation of a wash coating method, does not adversely affect a product after application of a catalyst, and ensures permeability of the outer portion when the material is used. However, Patent Literature 4 describes no specific method of forming a coat layer on the entire outer portion in a uniform manner. Moreover, in the case of the GPF, when inorganic filler having an expansion ratio different from that of the outer portion enters the pore of the outer portion, thermal shock resistance may be degraded during catalyst production or due to heat history or the like during driving. Therefore, such means that is described in Patent Literature 4 is not effective.

An object of the present invention is to provide a method of producing a film-coated cylindrical honeycomb structure capable of preventing catalyst slurry from leaching out to an outer portion during wash coating and is able to be produced in a stable manner, and a method of producing a catalyst in which the honeycomb structure is used as a catalyst support for a gasoline particulate filter (GPF).

### Solution to Problem

The inventors of the present invention have found that, as a result of zealous research to solve the above problems, a film-coated cylindrical honeycomb structure is able to be produced in a stable manner on a mass-production basis, when a film is formed on an outer portion of a cylindrical honeycomb structure including partition walls and the outer portion, the partition walls forming a plurality of cells, the outer portion serving as a circumferential side, the outer portion being made of a porous material, in such a manner that, by using a plurality of rollers having a drive function of rotating the cylindrical honeycomb structure and an application function of applying a coating liquid, the cylindrical honeycomb structure is brought into contact with the rollers to rotate to cause a coating liquid to adhere to the outer portion, so that application conditions such as the amount of application is able to be adjusted, and then the applied coating liquid is subjected to treatment such as subsequent drying to form the film; and that using the structure is able to prevent catalyst slurry from leaching out to the outer portion especially during wash coating and is able to ensure permeability of the outer portion when the structure is used as the GPF, to complete the invention.

According to a first aspect of the present invention, provided is a method of producing a film-coated cylindrical honeycomb structure by forming a film with a coating liquid on an outer portion of a cylindrical honeycomb structure including partition walls and the outer portion, the partition walls forming a plurality of cells, the outer portion serving as a circumferential side, the method including
mounting the cylindrical honeycomb structure between at least two rollers such that the circumferential side of the cylindrical honeycomb structure contacts with circumferential sides of the rollers, depositing the coating liquid supplied from an application part of the rollers on the cylindrical honeycomb structure while being rotated, and then drying or curing the deposited coating liquid to form film on the outer portion.

According to a second aspect of the present invention, in the first aspect, a method of producing a film-coated cylindrical honeycomb structure is provided, in which the partition walls and the outer portion are formed of the same material and the outer portion has permeability.

According to a third aspect of the present invention, in the first or the second aspect, a method of producing a film-coated cylindrical honeycomb structure is provided, in which the cylindrical honeycomb structure includes a plurality of channels defined by the cells each running from one opening end that is an inlet to another opening end that is an outlet, the cylindrical honeycomb structure serving as a wall-flow honeycomb in which the inlet and the outlet of each of the channels are alternately plugged on the opening ends.

According to a fourth aspect of the present invention, in any one of the first to the third aspects, a method of producing a film-coated cylindrical honeycomb structure is provided, in which the coating liquid contains polyvinyl alcohol as a resin component.

According to a fifth aspect of the present invention, in any one of the first to the fourth aspects, a method of producing a film-coated cylindrical honeycomb structure is provided, in which the resin component is dispersed or dissolved in water.

According to a sixth aspect of the present invention, in any one of the first to the fifth aspects, a method of producing a film-coated cylindrical honeycomb structure is provided, in which at least one of the rollers has an outermost surface formed of a sponge-like material.

According to a seventh aspect of the present invention, in any one of the first to the sixth aspects, a method of producing a film-coated cylindrical honeycomb structure is provided, in which at least one of the rollers is a drive and application roller having both a drive function and an application function.

According to an eighth aspect of the present invention, in any one of the first to the seventh aspects, a method of producing a film-coated cylindrical honeycomb structure is provided, in which the drive and application roller or an application roller is soaked in a coating liquid contained in a container to thereby supply the coating liquid to the application part of the roller.

According to a ninth aspect of the present invention, in any one of the first to the eighth aspects, a method of producing a film-coated cylindrical honeycomb structure is provided, in which the drive and application roller or an application roller introduces a coating liquid from a hollow pipe-like core thereof to supply the coating liquid to a circumferential side of the application part of the roller through a hole on a side surface of the pipe.

According to a tenth aspect of the present invention, in any one of the first to the ninth aspects, a method of producing a film-coated cylindrical honeycomb structure is provided, in which a member to remove an excess of the coating liquid with which the roller is impregnated is abutted against the drive and application roller or an application roller.

According to an eleventh aspect of the present invention, in any one of the first to the tenth aspects, a method of producing a film-coated cylindrical honeycomb structure is provided, in which at least one of the rollers is a drive roller to rotate the cylindrical honeycomb structure, and another of the rollers is an application roller.

According to a twelfth aspect of the present invention, in the eleventh aspect, a method of producing a film-coated cylindrical honeycomb structure is provided, in which the application roller is arranged above the cylindrical honeycomb structure.

According to a thirteenth aspect of the present invention, in the eleventh or the twelfth aspect, a method of producing a film-coated cylindrical honeycomb structure is provided, in which the drive roller has a rib in a circumferential direction thereof.

According to a fourteenth aspect of the present invention, in the thirteenth aspect, a method of producing a film-coated cylindrical honeycomb structure is provided, in which the rib is formed in a spiral shape.

According to a fifteenth aspect of the present invention, in any one of the first to the fourteenth aspects, a method of producing a film-coated cylindrical honeycomb structure is provided, in which the drive and application roller or an application roller has a length shorter than a length of the honeycomb structure.

According to a sixteenth aspect of the present invention, in any one of the first to the fourteenth aspects, a method of producing a film-coated cylindrical honeycomb structure is provided, in which the drive and application roller or an application roller has a length longer than a length of the honeycomb structure.

According to a seventeenth aspect of the present invention, in any one of the first to the sixteenth aspects, a method of producing a film-coated cylindrical honeycomb structure is provided, in which the drive and application roller or an application roller has a diameter larger than a diameter of the honeycomb structure.

According to an eighteenth aspect of the present invention, provided is a method of producing an exhaust gas purification catalyst for gasoline-powered cars, the method including by using the film-coated cylindrical honeycomb structure obtained with any one of the methods of the first to the seventeenth aspects, coating catalyst slurry on an inner surface of the honeycomb structure cell by the wash coating method, and then drying and firing the catalyst slurry, so that the catalyst component is carried thereon. Advantageous effects of the invention

A method of producing a film-coated cylindrical honeycomb structure of the present invention uses a plurality of rollers having a drive function of rotating the cylindrical honeycomb structure and an application function of forming film of a coating liquid on an outer portion of the cylindrical honeycomb structure, which makes it possible to adjust an application pressure, the amount of the coating liquid, and the like, whereby film forming state is easily controlled. The thus-obtained film-coated cylindrical honeycomb structure has a film formed on a circumferential side thereof, thereby preventing the catalyst slurry from leaching out to the outer portion during wash coating.

Consequently, it makes it possible to produce the film-coated cylindrical honeycomb structure and a gasoline particulate filter (GPF) catalyst using the structure in a stable manner at low cost on a mass-production basis.

### Brief Description of the Drawings

Fig. 1 is a schematic view showing one typical embodiment of a method of producing a film-coated cylindrical honeycomb structure of the present invention.
Fig. 2 is a schematic view obtained by adding some function to the embodiment of Fig. 1.
Fig. 3 is a schematic view showing another embodiment of the method of producing the film-coated cylindrical honeycomb structure of the present invention.
Fig. 4 is a schematic view obtained by changing some function to the embodiment of Fig. 3.
Fig. 5 is a schematic view obtained by changing some other function to the embodiment of Fig. 3.
Fig. 6 is a schematic view obtained by changing some function to the embodiment of Fig. 5.
Fig. 7 is a schematic view obtained by adding some function to the embodiment of Fig. 3.
Fig. 8 is a schematic view showing a side of the embodiment of a method of producing a film-coated cylindrical honeycomb structure of the present invention, which is related to Fig. 3.
Fig. 9 is a schematic view obtained by changing part of the embodiment of Fig. 8.
Fig. 10 is a schematic view obtained by changing some function to the embodiment of Fig. 3, which is one embodiment of a method of producing a film-coated cylindrical honeycomb structure of the present invention.
Fig. 11 is a schematic view is obtained by changing some function to the embodiment of Fig. 1, which is one embodiment of a method of producing a film-coated cylindrical honeycomb structure of the present invention.
Fig. 12 is a schematic view obtained by adding some function to the embodiment of Fig. 2, which is one embodiment of a method of producing a film-coated cylindrical honeycomb structure of the present invention. Description of Embodiments

The present invention is a method of producing a film-coated cylindrical honeycomb structure by forming the film on an outer portion of a cylindrical honeycomb structure including partition walls and the outer portion, the partition walls forming a plurality of cells, the outer portion serving as a circumferential side, with a coating liquid containing a resin component, in which
the cylindrical honeycomb structure is mounted between two rollers such that the circumferential side of the cylindrical honeycomb structure contacts with circumferential sides of the rollers, the rollers cause the coating liquid supplied from the rollers to be deposited onto the cylindrical honeycomb structure while rotating, and then, the deposited coating liquid passes through processes such as drying to form a film on the cylindrical honeycomb structure.

The following describes the present invention in detail step by step.

### 1. Cylindrical honeycomb structure

A cylindrical honeycomb structure (also simply called "honeycomb structure") used for the present invention includes partition walls and the outer portion, the partition walls forming a plurality of cells, an outer portion serving as a circumferential side. The partition walls form the plurality of cells serving as a plurality of respective through holes extending from one end face of the cylindrical honeycomb structure to the other end face thereof, which collectively form a honeycomb shape.

The honeycomb structure is mainly divided into two types, based on its structural feature: they are flow-through type (flow-through honeycomb) and wall-flow type (wall-flow honeycomb). The flow-through type includes through holes each end of which is not plugged, the through holes having ends each open from one open end face to the other open end face, and is widely used for oxidation catalysts, reduction catalysts, and TWC. By contrast, the wall-flow type has through holes in which one end and the other ends thereof are alternately plugged, thereby filtering solid components in exhaust gas such as soot and soluble organic fraction (SOF), and thus is used as a DPF. While the present invention is available for use in both types, the GPF is able to prevent catalyst slurry from leaching out to the outer portion during production, and thus the wall-fall honeycomb, in particular, is suitably used.

The material of such honeycomb structure is not limited as far as it is formed of a porous material, and each of the cells of the honeycomb structure has a diameter or a side of approximately 0.8 to 2.5 mm. The density of the honeycomb structure is also known as cell density and is expressed by the number of holes per unit section, which is not limited, but preferably 100 to 1200 cells/inch² (15.5 to 186 cells cm²). More preferably, the cell density is 150 to 600 cells/inch² (23 to 93 cells cm²), and further preferably 200 to 400 cells/inch² (31 to 62 cells cm²). A structure having the cell density of 100 to 1200 cells/inch² is difficult to occur clogging due to a catalyst component or a solid substance in exhaust gas, and is able to maintain usability as an exhaust gas purification catalyst without decreasing the effective usage rate.

Each of the partition walls serving as a cell wall to define the honeycomb structure preferably has a thickness of 1 to 18 mil (0.025 to 0.47 mm), and more preferably a thickness of 6 to 12 mil (0.16 to 0.32 mm). The structure having a thickness within this range will not become fragile and have geometric surface area of the cell not reduced, and thus will not decrease the effective usage rate of the catalyst.

When TWC for gasoline-powered cars is applied to the present invention, the honeycomb structure has at least an outer portion thereof formed of a porous material, but when the GPF is produced, the honeycomb structure is coated with a resin component, which prevents catalyst slurry from leaching out to the outer portion. The applied resin component becomes a film, and is removed by firing after the catalyst is carried. Thus, when the honeycomb structure is used as a filter, the outer portion thereof is able to have permeability.

For the partition walls defining the honeycomb structure to discharge exhaust gas therefrom to the outside, the partition walls are also preferably formed of a porous material. Moreover, the partition walls and the outer portion are preferably formed of the same material, and further preferably integrally molded with the same material so as to provide an effective production and to avoid a problem caused by a difference in materials.

For the catalyst for gasoline engines the temperature of which increases, there is concern over the problem that a crack occurs due to a difference in the thermal expansion ratio. Therefore, it is preferable that the partition walls and the outer portion have the same thermal expansion ratio or are integrally molded.

Examples of a material for the partition walls or the outer portion include a material made of inorganic oxides that are normally used as a porous material. For such inorganic oxides, ceramics materials such as alumina, cordierite, mullite, silica-alumina, and silicon carbide are known, and all of the porous material are applicable.

The cell walls and the outer portion preferably have a large number of pores. Characteristics of such pores are measurable with a various kinds of methods, such as gas adsorption method, Archimedes' method, and mercury porosimetry. In the present invention, unless otherwise particularly specified, values obtained by measuring with mercury porosimetry at mercury pressure 400 MPa are meant.

The partition walls and the outer portion preferably have a large number of pores thereon. Characteristics of such pores are measurable with a various kinds of methods, such as gas adsorption method, Archimedes' method, and mercury porosimetry. In the present invention, unless otherwise particularly specified, values obtained by measuring with mercury porosimetry at mercury pressure 400 MPa are meant.

The honeycomb structure of the present invention is effective when pore volume of each of the pores on the partition walls of the cells and the outer portion is 0.3 to 1.6 ml/g, and the pore volume preferably 0.8 to 1.6 ml/g, and more preferably 1.0 to 1.6 ml/g. Furthermore, the honeycomb structure is effective when average diameter of the pores on the honeycomb base material (the partition walls and the outer portion) is 10 to 25 µm, and the average diameter preferably 15 to 25µm, and more preferably 20 to 25 µm.

The characteristics of the pores may also be indicated as porosity (pore volume rate). The porosity of the honeycomb structure in the present invention means a percentage that pore volume occupies the geometric volume of a porous material, which is obtained based on thicknesses and lengths of the partition walls of the cells and the outer portion, and the cell density. The porosity in the present invention is 50 to 80%, preferably 60 to 80%, and more preferably 60 to 70%.

Excessively small pore volume, pore diameter, or porosity excessively increases the pressure loss of a honeycomb structure (catalyst support), and using the catalyst support for the GPF may cause the engine power decline. Excessively large pore volume, pore diameter, or porosity sometimes makes it impossible for the honeycomb structure to have sufficient strength.

The shape of the honeycomb structure is not particularly limited, as far as a coating liquid is able to adhere thereto with the rollers, and a generally known cylindrical honeycomb structure is available, in which the shape includes an elliptic-cylinder shape that is similar to a cylindrical shape.

That is, the honeycomb structure the section of which has a circular-like shape, while there may be possibly some limitations in connection with the rollers, is easy to form a film evenly thereon; however, the honeycomb structure the section of which has an elliptic shape is also able to form a film thereon. Moreover, the surface of the outer portion of the honeycomb structure may be roughened or may be chemically treated, in advance, to make it easier to form a film thereon.

### 2. Method of producing a film-coated cylindrical honeycomb structure

In the present invention, the cylindrical honeycomb structure is mounted between at least two rollers such that the circumferential side of the cylindrical honeycomb structure contacts with circumferential sides of the rollers, the rollers deposit the coating liquid supplied from an application part thereof onto the cylindrical honeycomb structure while rotating, and then, the deposited coating liquid is dried or cured to form a film on the outer portion.

### (1) Rollers

In the present invention, a plurality of rollers is used for the application part. At least one of the two rollers need to have an application function, and in addition to the two rollers, another roller having an application function may be provided.

The above-described rollers have a drive function of rotating the cylindrical honeycomb structure and/or an application function of forming a film on the outer portion by applying thereon a coating liquid.

That is, in the present invention, at least two rollers are used in which one roller having a drive function and an application function (also referred to as "drive and application roller") is used or one roller having a drive function (also referred to as "drive roller") and other roller having an application function (also referred to as "application roller") are combined to be used. When an additional application-part is provided in addition to the two rollers, the two rollers only need to have a drive function, in which one roller may be a drive roller and the other roller may be a roller having a function of pushing the cylindrical honeycomb structure toward the additional application part to enhance application efficiency.

Using at least two such rollers enables the outer portion of the cylindrical honeycomb structure to have a coating liquid applied thereon to form a film with subsequent drying, thereby producing the film-coated cylindrical honeycomb structure in a stable manner at low cost on a mass-production basis. It should be noted that a piece of equipment other than the roller, such as a brush, sponge, a belt, or a like-shaped application tool, for example, is usable as an application part.

### (2) Drive roller

The drive roller may be a roller that at least part of the circumferential part thereof contacts a honeycomb structure to rotate it. The material of a drive roller is not particularly limited, and not only an elastic body such as rubber but also ceramics similar to those for honeycomb structure are usable, and wood and metal may also be used. Moreover, the outermost surface of the roller may be roughened or chemically treated, in advance, to make it easier to rotate the honeycomb structure.

The circumferential part of the roller body may have a multi-layer structure including two or more layers. In the multi-layer structure, the outermost surface, which is to be wetted with emulsion of the coating liquid, is preferably formed of a sponge-like material so as to prevent damaged contacting with the honeycomb structure. Any desired sponge-like material is available as far as it serves the above-described function, and a general material such as urethane foam, polyvinyl alcohol, the cellulose-based, the rubber-based, the silicon-based, or an unwoven fabric is usable. Moreover, the body may be provided with an elastic body such as a spring to be supported by a production apparatus, so as to have a function of buffering an impact from the honeycomb structure.

The drive roller the section of which has a circular-like shape and has almost the same diameter at any desired point of the section, while there may be possibly some limitations in connection with the honeycomb structure, is easy to rotate, and the drive roller having an ellipse-shaped section may also be used.

The drive roller having any desired size is suitably used as far as the drive roller serves the above-described function; and the size is selectable as appropriate depending on the restrictions of the production apparatus. The roller that has almost the same size as that of the honeycomb structure is normally used, however, the roller that has a length or a diameter different from that of the honeycomb structure may also be used.

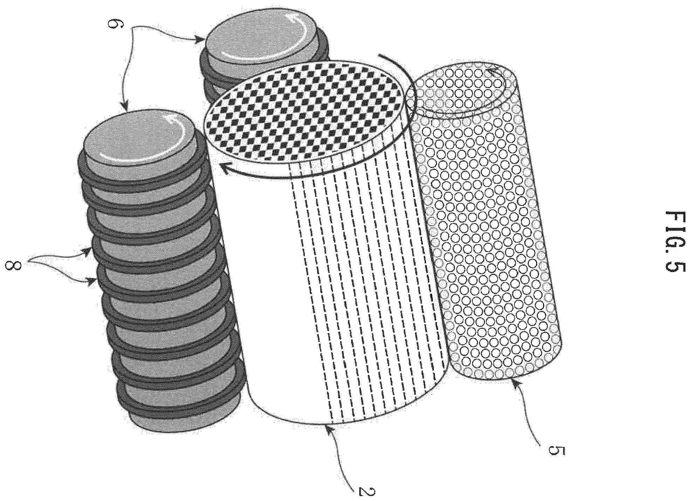

Furthermore, the drive roller having a rib formed in a circumferential direction thereof provides less contact area between the drive roller and the honeycomb structure, thereby preventing the coating liquid from adhering to the drive roller. A height and a width of the rib are not particularly limited, and while it depends on the diameter of the roller, the rib may have a height and a width of 0.1 to 30 mm, preferably 1 to 20 mm, more preferably 3 to 10 mm. The roller body and the rib may have the same or different physical properties such as material and hardness. Fig. 5 is a schematic diagram illustrating one embodiment of the drive roller.

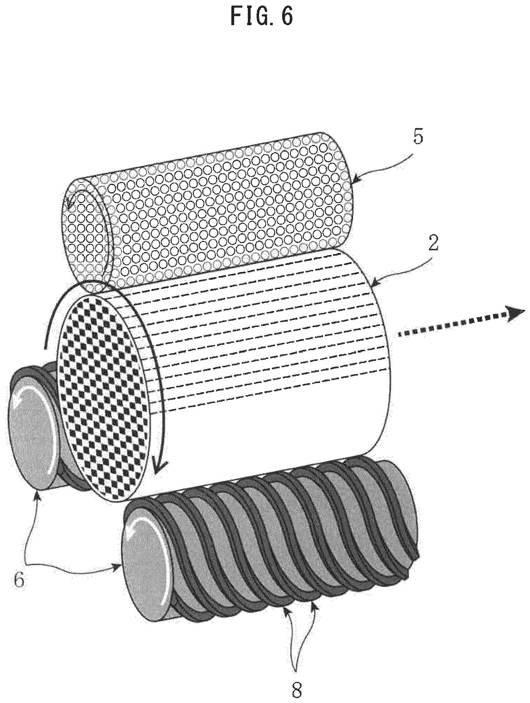

Furthermore, a drive roller having the rib spirally formed therearound enables the honeycomb structure to move forward in a spiral direction as the drive roller moves, as schematically illustrated in Fig. 6. While the power source of drive is not particularly limited, use of an electric motor is preferable.

### (3) Application roller

An application roller is a roller that is able to cause a coating liquid to adhere to the outer portion of the honeycomb structure; and the roller preferably rotates in accordance with the rotation of the honeycomb structure. That is, the application roller in the present invention normally refers to a roller having no drive function of rotating the honeycomb structure, which is distinguished from a drive and application roller having both the drive function and an application function.

While the application roller is not limited in terms of a material, a roller having the outermost surface formed of a sponge-like material is preferable. For the sponge-like material, as is the case with the above, polyurethane foam, polyvinyl alcohol, the cellulose-based, the rubber-based, the silicon-based, or an unwoven fabric is suitably usable. In addition to the sponge-like material, a gravure roll may be used that is an elastic body, such as rubber, having thereon unevenness in which a coating liquid is retainable.

When polyvinyl alcohol (PVA) based sponge is used for the application roller of the present invention, while physical properties thereof are not particularly limited, it is preferable that the physical properties provide tensile strength of approximately 100 to 800 kPa, extension rate of approximately 100 to 500%, porosity of approximately 30 to 95 volume%, and water retention rate of approximately 100 to 2,000 weight%, for example.

It should be noted that examples of the polyvinyl alcohol (PVA) sponge of the present invention include sponge in which at least part of the PVA is subjected to acetalization.

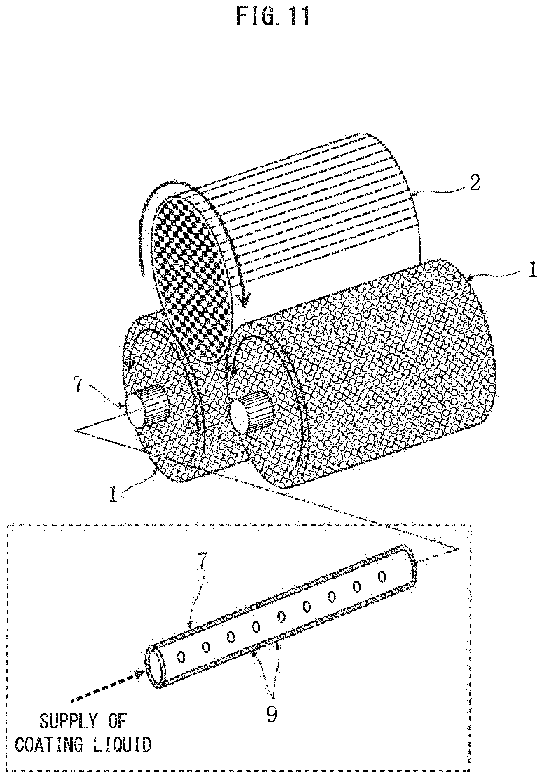

As illustrated in Fig. 11, the application roller may have a structure in which a core of the roller has a pipe-like shape and has a plurality of holes on a side of the pipe. The application roller is able to apply a coating liquid from the holes on the side of the pipe by supplying the coating liquid to the pipe of the core.

As described above, the application roller is made of a porous medium such as sponge or rubber, and when the application roller contacts with the honeycomb structure, the honeycomb structure is sometimes sunk into the surface of the application roller.

When the application roller is sunk due to contact with the honeycomb structure, the pores on the surface of the application roller are sometimes crushed and the impregnated coating liquid is squeezed to the surface of the application roller or the application roller is warped to be brought into contact with the opening of a cell. The squeezed coating liquid or the application roller that is in contact with the opening of the cell sometimes blocks the opening of the honeycomb structure with the coating liquid. In particular, a resin composition solution, which will be later described, has viscosity and due to the influence of this viscosity, the opening of the cell is likely to be blocked.

The thus blocked opening prevents supply of the catalyst composition to the inside of the cell during coating of the catalyst composition slurry, and some of the cells or partition walls do not possess a catalytic function with the catalyst. With a cell or a partition wall that does not have a catalytic function, exhaust gas purification is not performed, which means the purification performance of a honeycomb structure type catalyst is degraded.

Therefore, a depth of sinking of the honeycomb structure is preferably less than a depth of one cell inside the outer portion of the honeycomb structure, and more preferably less than a thickness of the outer portion thereof.

To provide control of amounts of the sinking, it is necessary to select an appropriate material of the application roller in accordance with a size or a weight of the honeycomb structure, and when the honeycomb structure is pushed by the roller, it is necessary to control pressure applied to the honeycomb structure.

An application roller the section of which has a circular-like shape, although there may be possibly some limitations in connection with the rollers, normally is easy to apply the coating liquid evenly, and an application roller having an ellipse-shaped section also enables application of the coating liquid.

Moreover, it is preferable that the application roller has a length equal to or a little larger than the size of the honeycomb structure. While there is some restriction based on the size of the entire production apparatus, based on various conditions including the coating liquid, a material of the honeycomb structure, and coating speed, a preferable size of the roller is determined as appropriate, and normally an application roller having a length of 50 to 300 mm, preferably 80 to 200 mm, is usable. An application roller the length of which is longer than the honeycomb structure (long roller) enables application to the entire outer portion of the honeycomb structure, is preferable. By contrast, an application roller having a length shorter than the honeycomb structure (short roller) is suitable for application to part of the honeycomb structure.

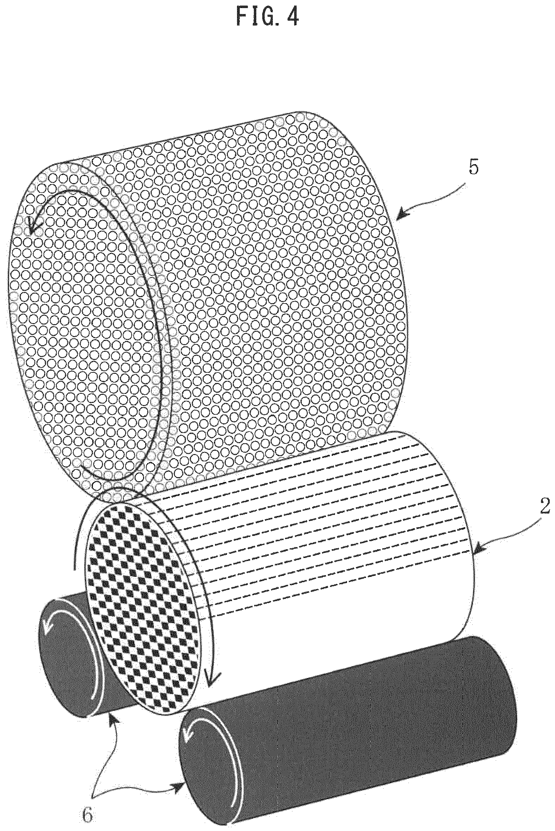

Moreover, an application roller the diameter of which is, although not particularly limited, 30 to 500 mm is usable. The diameter of the application roller may be smaller or larger than the diameter of the honeycomb structure. There are some cases that an application roller having a diameter different from that of the honeycomb structure is able to control the rotation speed thereof to prevent splash of the coating liquid from scattering. Fig. 4 is a schematic diagram illustrating one embodiment of the application roller.

For some types of coating liquid, sometimes the application roller is impregnated with an excess amount of coating liquid. In this case, it is preferable that the excess amount of coating liquid is wrung from the roller contact surface (10) with a member to squeeze or scrape off to remove the excess amount of coating liquid, with one end of the member being located in periphery of the roller, and a side surface thereof being close to or pressured against the roller.

The member is not limited by a material or a shape and may be a cylindrical member or a plate-like member such as a scraper. When the cylindrical member is formed of metal, for example, it may be formed to a rotatable member the surface of which is covered with rubber of several millimeters thickness. When two or more application rollers are used, any one of the application rollers may only be provided with the cylindrical member. The cylindrical member may be provided to each of the two or more application rollers, but normally, it is preferable that the roller that supplies the coating liquid is provided with the cylindrical member.

### (4) Drive and application roller

As described above, the drive and application rollers is able to rotate a honeycomb structure mounted above the roller, the drive and application roller storing a coating liquid in the outermost surface of the roller to be able to deposit the coating liquid onto the outer portion of the honeycomb structure. Therefore, the drive and application roller preferably has both characteristics of the drive roller and characteristics of the application roller.

The roller having such function preferably has an outermost surface formed of a sponge-like material. For the sponge-like material, although the same material as that described the above is usable, polyurethane foam, polyvinyl alcohol, the cellulose-based, the rubber-based, the silicon-based, or an unwoven fabric is suitable. The same gravure roll as described above may be used. When polyvinyl alcohol (PVA) based sponge is used for the drive and application roller, physical properties or the like thereof are not particularly limited, as is the case with the application roller.

The roller body and constituent members thereof may be entirely sponge-like or rubber-like, or may be a cylinder made of metal or hard resin molding, the cylinder having a surface covered with various kinds of sponge or an elastic body. While means for covering a surface of a rigid cylinder with sponge or an elastic body is not particularly limited, adhesion and surface roughening of the cylinder are included in the means, and it is preferable that the sponge or the elastic body does not idle or is bent on the cylinder surface during a coating process in a subsequent stage.

The drive and application roller the section of which has a circular-like shape, although there may be possibly some limitations in connection with the honeycomb structure, is easy to have even application, and application to the drive roller having an ellipse-shaped section is also possible.

Moreover, the drive and application roller having any desired size is used as far as the drive and application roller serves the above-described function; and the size is selectable as appropriate depending on the restrictions of the apparatus; however, normally a drive and application roller having almost the same size as the honeycomb structure or of having a length of 50 to 300 mm, preferably 80 to 200 mm, is used. Moreover, the drive and application roller is desirable the diameter of 30 to 500 mm, preferably 50 to 450 mm.

As is the case with the application roller, the drive and application roller preferably has a member to remove excess coating liquid from the application part of the honeycomb structure, mounted on the end of the roller. Examples of the member include a rotatable cylindrical member, and details of a shape and a material of such member are the same as those for the application roller.

The cylindrical member is able to be rotatably mounted in such a manner that the cylindrical member is pressed against a cylindrical surface of the application roller or the drive and application roller. Such cylindrical member enables the application roller or the drive and application roller to maintain a constant impregnation weight distribution of the coating liquid applied to the cylindrical surface thereof, thereby preventing coagulation of the coating liquid on the roller surface or inside the sponge. Such an effect is effective when the application roller or the drive and application roller is larger than the honeycomb structure in width. Removing residual coating liquid not consumed during coating from the roller enables the roller to constantly receive a fresh coating liquid set to a certain concentration and a certain composition.

A position at which such a cylindrical member contacts with the roller surface is not particularly limited, and the position may be a position determined before a coating liquid is coated to the honeycomb structure after the coating liquid is supplied to the roller, or a position determined before another amount of coating liquid is supplied to the roller after a coating liquid is coated to the honeycomb structure.

To supply the coating liquid to the drive and application roller, as is the case with the application roller, it is preferable that the drive and application roller is soaked in the coating liquid contained in a container, to have the coating liquid supplied thereto. When two or more drive or application rollers are used, the coating liquid may be supplied to any one of the rollers or may be supplied to both the rollers. The coating liquid may be supplied to the inside of the drive and application roller. To do so, the core of the drive and application roller, the core being horizontally mounted to a coating apparatus in a longitudinal direction, may have a pipe-like shape that is bored.

### (5) A method of forming a film

In the present invention, a film is formed when, with the rollers, a coating liquid adheres to the circumferential side of the honeycomb structure and the coating liquid is dried or cured.

The film does not always need to completely fill up the pores of the outer portion made of a porous material, and as described above, it is sufficient for example, when the wash coating method is used, that the pores are reduced in size or number to the extent that the catalyst slurry is prevented from leaching out.

### (i) Production (coating) apparatus

The present invention uses the coating apparatus having a configuration in which the rollers are provided to an apparatus body, the rollers being able to rotate such that the honeycomb structure contacts therewith, and the application roller or the drive and application roller is able to supply therefrom the coating liquid.

The configuration of the coating apparatus includes, for example, the application roller a bottom end of which is soaked in a coating liquid bath to be able to supply an appropriate amount of liquid adhering to the roller to the circumferential side of the honeycomb structure, or the drive and application roller to cause the honeycomb structure to rotate with rotation contact therebetween. At least two such rollers are used, and various embodiments for types and dispositions thereof are conceivable as described later. One of the rollers may be a drive roller and the other may be an application roller. Among these rollers, two drive and application rollers are preferably used, each having a drive function, serving as an application roller.

For the disposition of the rollers, for example, two rollers may be arranged parallel to each other so that the honeycomb structure will be stably mounted thereon. Moreover, the coating liquid bath stores a certain amount of coating liquid, and whenever the honeycomb structure is soaked in the bath, another amount of coating liquid is replenished for a decreased amount of the coating liquid.

It is preferable that the coating apparatus body is covered so that a solvent vapored or volatilized from the liquid bath or the like will be shielded, and includes a ventilator to discharge a vapor or the like to the outside therefrom.

The production apparatus body may further have a dryer that enables drying with ventilation provided thereto, or may be able to move the honeycomb structure to a heater and a dryer through a belt conveyor.

### (ii) Coating liquid

The coating liquid is a liquid containing a resin component or the precursor thereof. The resin component has a large molecule weight and the precursor thereof is also difficult to apply singly; therefore, it is preferable that the resin component is dispersed or dissolved in a solvent when used.

The resin component is preferably made of an organic material. Examples of the resin component include polyvinyl alcohol (PVA), polyethylene glycol (PEG), agar, gelatin, starch, and sucrose, each of which is easily dissolved in water or other solvent to make a solution. In particular, polyvinyl alcohol (PVA) is preferable. The above-described resin components are preferably used in a form of emulsion in which polymers are dispersed or dissolved in water. Moreover, the molecule weight of resin is not particularly limited, and a hydrophilic component or a reactive component for hardening need not be blended. It is necessary that organic resin accounts for 1 to 50 weight% of the whole emulsion, preferably 3 to 40 weight%.

Examples of the resin component of the coating liquid include, other than the above, organic resins such as acrylic resin, acrylic silicone resin, acrylic styrene resin, vinyl acetate resin or polyurethane resin. Resin composition containing the above resin components is preferably used in a form of emulsion in which the resin composition is dispersed or dissolved in water or other solvent.

By contrast, materials that are mainly composed of organic resins that are solid in normal temperatures, such as wax, organic pigment, and the like each having a large molecule weight and having no hydrophile, for example, are also usable, but sometimes these materials are difficult to apply as they are to the honeycomb structure. When a film forming component is not easy to enter inside of a macro pore from the outer portion of the honeycomb structure, uneven coating occurs, whereby leaching out of slurry is sometimes difficult to be prevented. However, it is possible to use such material in some form, by being dispersed or dissolved in water or organic solvent, for example.

Organic material is mainly composed of the above organic resins, and may contain a small amount of inorganic filler. That is, it is preferable that the total amounts of organic resin that adheres to the honeycomb structure outer surface and organic resin that is included in the macro pore from the outer portion accounts for at least 90 weight% of the whole material. While the organic material may contain titanium oxide, alumina, silica, or other inorganic filler, it is preferable that the amount of these inorganic filler is 10 weight% or less, preferably 5 weight% or less. If the amount of inorganic filler is large enough to exceed 10 weight%, inorganic filler entering inside the macro-pore in the partition wall of cell sometimes remains after a catalyst is carried to reduce the pore, leading to pressure loss or a crack. Consequently, the organic material preferably does not contain any inorganic filler.

Using water as solvent is safe, and low in cost, but organic solvent such as alcohol may be used. Considering easiness for subsequent drying and safeness, it is preferable to use ethanol, the boiling point of which is low.

Raw material of organic-based material may contain, other than the resin components, water, alcohol, and the like, an appropriate amount of resin varnish, thickener, wetting agent, curing agent, coloring agent, fixing agent, preservative, or other substance.

Examples of resin varnish include aqueous shellac varnish, aqueous casein varnish, aqueous rosin maleic acid resin varnish, aqueous polyester resin varnish, watersoluble cellulose varnish, for example.

Examples of thickener include methylcellulose, hydroxyethyl cellulose, and polyurethane resin; examples of wetting agent include alkyl alcohol ethylene oxide adduct; and examples of the film-forming aid include 2,2,4-trimethyl-1,3-pentanediol, di-propylene glycol n-butyl ether, propylene glycol n-butyl ether, and polypropylene glycol monomethyl ether.

The temperature of the coating liquid containing water, although depending on types of components, is preferably 5 to 80°C, more preferably 10 to 40°C. Within the range of these temperatures, moisture in the coating liquid does not rapidly evaporation inside the pore of the outer portion, so that a evaporated water does not cause the outer portion to crack; the moisture in the coating liquid does not freeze inside the pore, so that a frozen moisture the volume of which increases does not cause the outer portion to crack; and a sealer (coating liquid) is not thickened due to a temperature decrease, so that it does not happen that the control of a coating depth of the coating liquid becomes difficult to the honeycomb structure. The coating liquid may be adjusted in terms of temperature in advance with a heater and a cooler before being supplied to a storage or may be adjusted by heating or cooling in the storage.

### (iii) Forming a film

The following describes forming a film on the basis of a specific embodiment.

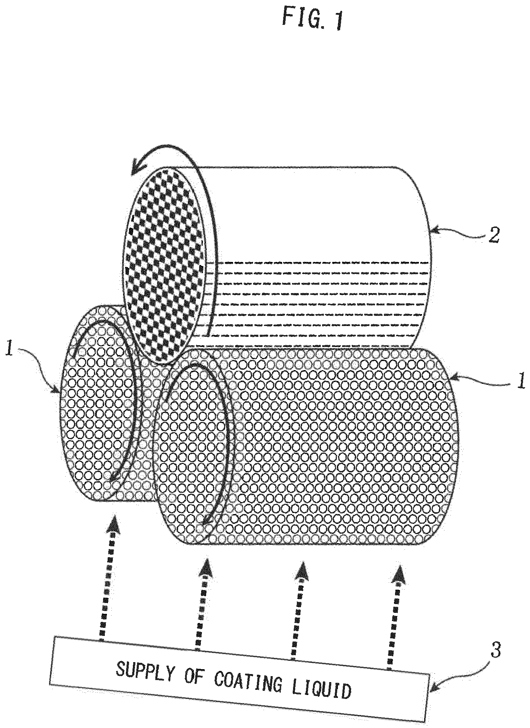

Fig. 1 is a schematic diagram illustrating an example in which two drive and application rollers are disposed parallel to each other, and the honeycomb structure is mounted above therebetween to be rotated by the rollers to cause the coating liquid to deposit to the circumferential side of the honeycomb structure.

First, a liquid bath (3) that stores a coating liquid containing an organic material is prepared, dispose a plurality of drive and application rollers (1) with bottom ends thereof soaked in the coating liquid, and a honeycomb structure (2) is mounted between the rollers with a circumferential side of the honeycomb structure (2) contacting with the rollers. The drive and application rollers each preferably have an outermost surface formed in a sponge-like material. For a positional relation between the rollers and the honeycomb structure, as a distance between the rollers increases, the bottom of the honeycomb structure becomes closer to the coating liquid, and as the distance between the rollers decreases, the bottom of the honeycomb structure becomes farther from the coating liquid. It is preferable that the bottom of the honeycomb structure does not contact with the coating liquid and that the distance between the rollers is such that the coating liquid does not enter inside the cell. The honeycomb structure is thus stably mounted between the rollers, which makes it possible to apply the coating liquid the outer portion in a focused manner.

To supply the coating liquid to the drive and application roller, it is preferable that at least the outermost surface made of a sponge-like material, of the roller, is soaked in the coating liquid filled in a container. When two or more drive and application rollers are used, any one of the drive and application rollers may be supplied with the coating liquid, or both may be supplied therewith.

In the present invention, the honeycomb structure may be heated or cooled before being used. That is, although the temperature of the honeycomb structure is not particularly limited, when a water is used as solvent, the honeycomb structure may be heated to 100°C so that the honeycomb structure outer portion will have a high temperature, or by contrast, may be cooled to 0°C so that the honeycomb structure will have a low temperature.

The temperature of the honeycomb structure is preferably 5 to 80°C before coated with the coating liquid, more preferably 10 to 40°C. Within the range of these temperatures, water in the coating liquid does not rapidly evaporate inside the pore of the outer portion, so that a evaporated water does not cause the outer portion to crack; the water in the coating liquid does not freeze inside the pore of the outer portion, so that a frozen water the volume of which increases does not cause the outer portion to crack, and a sealer is not thickened due to a temperature decrease, so that it does not happen that the control of a coating depth of the coating liquid becomes difficult to the honeycomb structure. The honeycomb structure may be in the heater and the cooler in advance, or may be adjusted in terms of temperature by heating or cooling the air of coating atmosphere.

The temperature of the honeycomb structure has a close relation to the temperature of the coating liquid supplied to the application part with the rotation of the application roller.

In the present invention, the coating liquid is applied to the outer portion of the honeycomb structure in a rolling manner with the application roller. The outer portion of the honeycomb structure is made of a porous material, so that the coating liquid permeates to the outer portion of the honeycomb structure. It is preferable that an impregnation (permeation) depth of the coating liquid is approximately for one cell inside the outer portion, and it is possible to control such impregnation depth by controlling the amount of the coating liquid. The amount of the coating liquid is controlled based on conditions determined that include the number of rotation times of the application roller, the impregnation weight of the coating liquid in the application roller, and the viscosity of the coating liquid.

When the honeycomb structure has an appropriate temperature, by controlling the coating conditions of the coating liquid to specified values, it is possible to impregnate the coating liquid to a certain depth from the outer portion of the honeycomb structure. However, when the honeycomb structure has an excessive high temperature, in some cases, the solvent of the coating liquid is rapidly volatilized during the coating process. The coating liquid from which the solvent is volatilized has higher viscosity, so that sometimes the coating liquid is not impregnated to the honeycomb structure to a predetermined depth. Moreover, in some cases such volatilization of solvent does not occur evenly on the surface of the outer portion, and in this case, the impregnation depth of the coating liquid becomes uneven.

When impregnation with the coating liquid is insufficient or uneven, during wash coating of a catalyst component in the next process, the catalyst component sometimes enters inside the outer portion. When the catalyst component enters the outer portion of the honeycomb structure, the honeycomb structure type catalyst will become a catalyst that is likely to cause problems such as increase of the back pressure of exhaust gas and the occurrence of a crack due to a heat history, the problems being solved in the present invention.

Furthermore, when the influences of the temperature of the outer portion of the honeycomb structure and thickening, vaporization, and freezing of the coating liquid are considered, it seems that a difference in temperature between the coating liquid and the outer portion of the honeycomb structure is preferably small. Such temperature difference between the coating liquid and the outer portion of the honeycomb structure is preferably within 20°C, more preferably 10°C.

After the above-described preparation is completed, as illustrated in Fig. 1, the drive and application roller (1) is driven to rotate. As the drive and application roller (1) rotates, the honeycomb structure (2) rotates, and when rotates at least once, the whole periphery of the honeycomb structure (1) is coated with an organic-based coating liquid depositing to the drive and application roller (1). The organic resin component included in an emulsion liquid receives a centrifugal force during the rotation of the roller, partly entering the macro pore from the outer portion.

In this case, the rotation speed of the drive and application roller is, although depending on the size or the resin material type of the roller used, 0.1 to 50 rpm, for example, preferably 1 to 30 rpm.

As the rotation speed decreases, the amount of the coating liquid adhering to the outer portion of the honeycomb structure or the amount of the coating liquid permeating into the pore increases, thereby enabling a sufficient inclusion of the coating liquid in the macro pore passing through the outer portion. Within the range of the above-described rotation speed, even if the rotation speed decreases, there is no possibility that the amount of permeation from the outer portion of the honeycomb structure into the cell excessively increases to cause an excess coating liquid to overflow from the macro pore to adhere to the cell wall. However, when the number of rotation times is excessively large, in some cases, the coating liquid scatters upon receiving the centrifugal force of the roller or contact between the honeycomb structure and the roller is not even. Furthermore, for the number of rotation times, the honeycomb structure may rotate on the drive and application roller circumferentially only once, but so may do a plurality of times. The honeycomb structure rotating a plurality of times for the above-described number of rotation times eliminates uneven application therefrom to provide more secure application. The number of rotation times of the honeycomb structure is preferably 1 to 10 times, more preferably 1 to 5 times.

When a resin component dissolved or dispersed in a medium (solvent) is used for the coating liquid, the honeycomb structure coated with the coating liquid is transferred to a drying (curing) process. While the drying (curing) process is not particularly limited, the process may be performed under the atmospheric pressure or under reduced pressure at a temperature of 0 to 200°C, preferably at room temperature. The surface of the honeycomb structure may be exposed to the air or inert gases, or placed under reduced pressure, as required. Heating is, although it depends on the type of the resin, preferably performed at a temperature of 50 to 200°C, more preferably 100 to 180°C.

Thus, the reduction of water causes the resin component to be cured (solidified) to provide a film-coated honeycomb structure.

Employing a method of the present invention, in which the cylindrical honeycomb structure, the rollers, and the coating liquid in the present invention are combined, provides a film in which a macro pore of the outer portion is reduced in size to the extent that slurry does not leach out from the outer portion during wash coating, the film disappearing due to heat during the catalyst production without having unfavorable effect on the catalyst.

In the present invention, a method in which two drive and application rollers described above is preferable, and the method is referred to as Embodiment 1 of the method of forming a film. Hereinafter, for the method of forming a film of the present invention, Embodiment 2 to Embodiment 12 are provided, and the following Embodiment 2 is modification of Embodiment 1.

### Embodiment 2: Example of using a drive and application roller having a cylindrical member in Embodiment 1

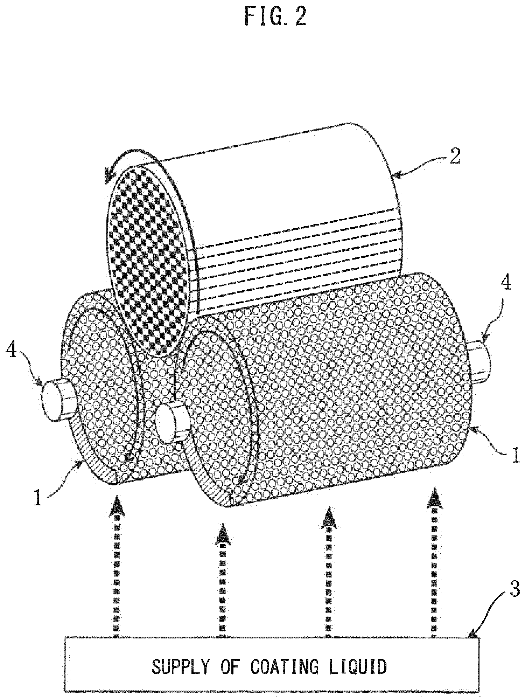

This Embodiment 2 illustrated in the schematic diagram of Fig. 2 is the same as Embodiment 1 except that the drive and application roller (1) to cause the coating liquid to adhere to the honeycomb structure (2) has a cylindrical member (4) made of metal or the like mounted thereto.

The cylindrical member (4) of the drive and application roller (1) has a function of squeezing the coating liquid from the roller, and may be fixed to the roller body or may be rotatably mounted thereto. While the size of the cylindrical member (4) is not limited, when the diameter thereof is small, for example, approximately 5 to 50 mm, the cylindrical metal may be used as it is. Furthermore, the metal cylinder having a surface covered with a rubber or resin film is preferable in terms of replacement of the liquid and a maintenance function of the roller. When one end of the cylindrical member is located near the periphery of the roller and the side thereof is closed to or pressured against the roller, the coating liquid is squeezed from a roller contact surface (10). The cylindrical member may be mounted to both the drive and application rollers or may be mounted to either thereof.

Instead of the cylindrical member (4), a plate-like scraper may be used. Furthermore, both of the cylindrical member (4) and the plate-like member may have a groove-like recess to discharge the coating liquid.

### Embodiment 3: Example of using two drive rollers and one application roller

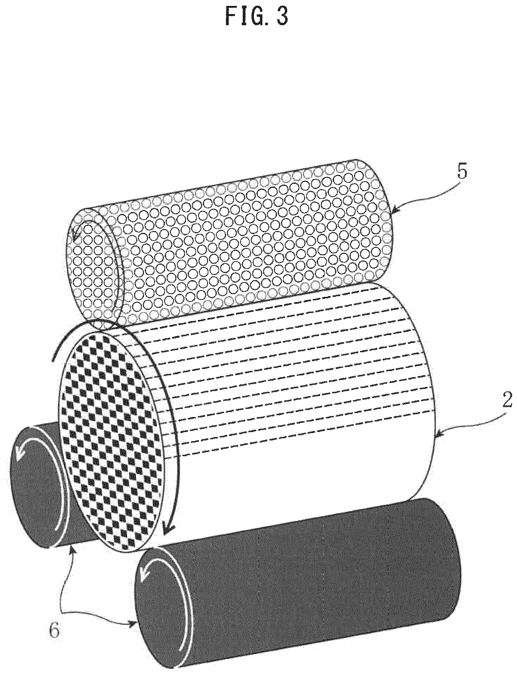

In this Embodiment 3 as illustrated in the schematic diagram of Fig. 3, two drive rollers (6) are used and the honeycomb structure (2) is mounted thereon. The honeycomb structure (2) is mounted between the two drive rollers (6) located thereunder and the drive rollers (6) are rotated to cause an application roller (5) to apply the coating liquid to the top of the honeycomb structure (2).

In Embodiment 3, unlike the above-described Embodiments 1 and 2, the coating liquid is supplied above the upper honeycomb structure; and after the coating liquid adheres to the honeycomb structure, the excess coating liquid drops down to the drive rollers. Consequently, the application roller has a pipe or the like mounted thereon to cause the coating liquid to flow along the roller like a shower and has a pan to receive the coating liquid on the bottom thereof, which are not illustrated. When the coating liquid has high fluidity, the liquid received by the pan is able to circulate upward to the top of the roller. The pipe to supply the coating liquid may be built in the core of the roller.

Furthermore, a liquid bath may be separately mounted to cause the application roller to move to the liquid bath as necessary, wet the application roller with a required amount of the coating liquid, and then set above of the honeycomb structure.

### Embodiment 4: Example of using an application roller having a diameter larger than the diameter of honeycomb structure in Embodiment 3

Embodiment 4 illustrated in the schematic diagram of Fig. 4 is the same as Embodiment 3 in which the two drive rollers (6) are used, except that the application roller (5) has a diameter larger than the diameter of the honeycomb structure. While the size of the application roller (5) is not particularly limited, the diameter thereof is preferably 1.2 to 3 times the diameter of the honeycomb structure (2), for example, preferably 1.5 to 3 times.

The application roller (5) in Embodiment 4 has a large dimeter, thereby easily increasing the rotation speed of the honeycomb structure. It is possible to prevent the coating liquid from scattering around the rollers, which is caused by the centrifugal force of the application roller, when the application roller is driven in a manner that the rotation speed thereof does not excessively increase, and thus improved productivity is expected. The layout of the apparatus members, the supply system of the application system, and the like are the same as those of Embodiment 3.

### Embodiment 5: Example of using a drive roller having a rib formed therearound

This Embodiment 5 illustrated in the schematic diagram of Fig. 5 is the same as the Embodiment 3 in which the application roller (5) is used, except that the drive roller (6) having a rib (8) formed therearound is used.

The drive roller (6) has the rib (8) formed therearound, which makes it possible to stably mount the honeycomb structure (2) thereon. Furthermore, because of the rib, a contact area between the drive roller (6) and the honeycomb structure (2) is reduced, so that the adhesive force of the coating liquid decreases during drying or high temperatures, thereby preventing the coating liquid from sticking to the drive roller (6).

A method of providing the rib (8) to the roller is not particularly limited as far as the rib (8) has a ring-like shape. A drive roller may be molded so as to have a rib-like shape in advance, or a plurality of rings may be later provided to the roller. The height and the width of the rib (8) may be the same or may be different depending on the roller. While it depends on the size of the drive roller, 0.1 to 30 mm is preferable, 1 to 20 mm is more preferable, and 3 to 10 mm is further preferable, for example.

### Embodiment 6: Example of using a drive roller having a rib spirally formed therearound

This Embodiment 6 illustrated in the schematic diagram of Fig. 6 is the same as Embodiment 5, except that the drive roller (6) having the rib (8) spirally formed therearound is used. The rib is not particularly limited as far as it has a spiral-shape. For a method of providing the rib (8) to the roller, a roller that is molded so as to have a rib shape in advance may be used or a line-shape substance may be spirally provided later to the roller.

The height and the width of the rib (8) may be the same or may be different depending on the roller. While it depends on the size of the drive roller, 0.1 to 30 mm is preferable, 1 to 20 mm is more preferable, and 3 to 10 mm is further preferable, for example. When the drive roller (6) having the rib (8) spirally formed therearound is used, the honeycomb structure (2) is stably mounted on the roller. Furthermore, the drive roller (6) having the rib (8) spirally formed therearound rotates for an appropriate number of times to thrust the film-coated honeycomb structure, to which the organic coating liquid is applied with the application roller (5), in a direction from one side to the other side of the honeycomb structure, so as to move to the next step. That is, the rotation of the drive roller transfers the honeycomb structure forward, which enables an efficient production.

### Embodiment 7: Example of using two drive rollers and two application rollers

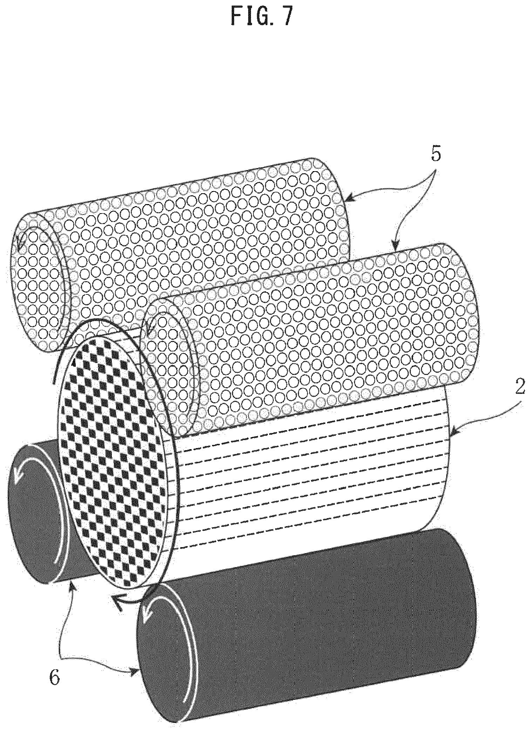

This Embodiment 7 illustrated in the schematic diagram of Fig. 7 is the same type as Embodiment 3, except that two application rollers (5) are used.

The honeycomb structure (2) is mounted on the driving rollers, the honeycomb structure (2) is rotated by the driving rollers (6), and the application roller (5) causes the coating liquid to adhere to the top of the honeycomb structure (2). Embodiment 7 enables secure application of the coating liquid even having high viscosity to the honeycomb structure (2). Example using the application rollers (5) different in size to each other and the driving roller using a rib are also categorized in Embodiment 7.

### Embodiment 8: Example of using an application roller shorter than the honeycomb structure

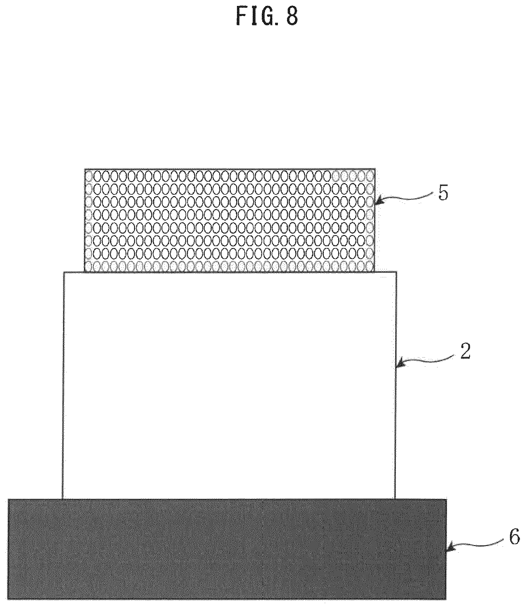

Fig. 8 is a schematic diagram illustrating Embodiment 8. Normally, the coating liquid adheres to the whole circumferential side of the honeycomb structure; however, when only part of the circumferential side is coated with the coating liquid, Embodiment 8 is used. Depending on whether the application part is in the center or in the edge, a relative position between the honeycomb structure and the application roller is determined.

Moreover, the coating liquid easily enters a cell from the circumferential side of the honeycomb structure (2) to cause clogging of the cell; however, when the application roller (5) is shorter than the honeycomb structure (2), adhesion of the liquid is not beyond the circumferential side, thereby preventing the clogging. It should be noted that the layout, the size, the number of units mounted, and the like are optional for the drive roller (6) and the application roller (5).

### Embodiment 9: Example of using an application roller longer than the honeycomb structure

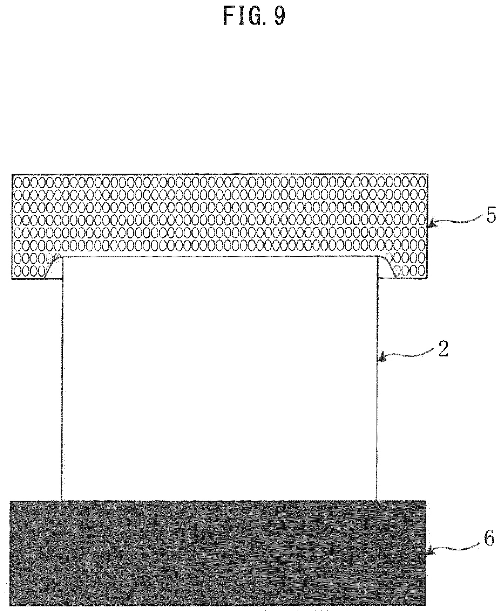

In Embodiment 9 illustrated in the schematic diagram of Fig. 9, as opposed to Embodiment 8, the application roller is longer than the honeycomb structure (2). Therefore, one rotation of the honeycomb structure (2) surely enables one-time application of the coating liquid in the whole area in the longitudinal direction of the honeycomb structure (2). It should be noted that the layout, the size, the number of units mounted, and the like are optional for the drive roller (6) and the application roller (5).

Furthermore, the application roller (5) used in Embodiment 9 is made of a porous medium, and the surface thereof may be contacted with the honeycomb structure (2) such that the honeycomb structure (2) is sunk as illustrated in Fig. 9. In this case, the depth of sinking is preferably less than the thickness of the outer portion of the honeycomb structure (2). This configuration prevents the resign composition solution from forming a film in the opening of the cell, and prevents reduction of an effective active area of the honeycomb structure type catalyst deriving from a geometric area of the honeycomb structure, without preventing introduction of the catalyst to the cell when making the honeycomb structure have a catalytic function.

### Embodiment 10: Example of using two drive rollers and one application roller

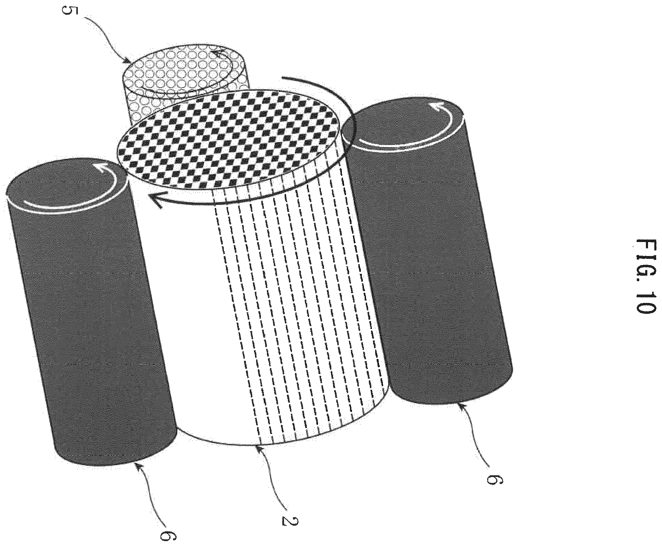

In Embodiment 10 illustrated in the schematic diagram of Fig. 10, two drive rollers (6) are used, the honeycomb structure (2) is mounted between the drive roller and the application roller (5), each of which being below the honeycomb structure, and the drive roller is mounted also on and above the honeycomb structure. Then, while the honeycomb structure (2) is rotated with the drive rollers (6) both above and below the honeycomb structure (2), the drive roller thereon pushes down the honeycomb structure (2), so that the amount of coating liquid adhering to the honeycomb structure (2) increases. It should be noted that one of the drive rollers (6), above or below the honeycomb structure (2), may have no drive function, that is, may be an idling roller.

### Embodiment 11: Example of using an application roller having a pipe in the center thereof to supply the coating liquid

This Embodiment 11 illustrated in a schematic diagram of Fig. 11 uses, as a drive and application roller (1) to the honeycomb structure (2), a pipe having a plurality of holes (9) on a side of a core (7) of the pipe. When the coating liquid is supplied to the core, the coating liquid is supplied to the surface of the honeycomb structure (2). Other than this, Embodiment 11 is the same as Embodiment 1 in which the coating liquid is supplied from the liquid bath.

Embodiment 11 provides no liquid bath, and a contact area between the coating liquid and the atmosphere is small, thereby preventing the liquid from drying. The pipe aperture, the hole diameter, a distance between the holes, and the like are not particularly limited, and are determined depending on the size of the drive and application roller, the type of the coating liquid, and the like. It is preferable, for example, the pipe aperture is 5 to 50 mm, the hole diameter is 0.1 to 5 mm, the distance between the holes is 1 to 10 mm, for example, and it is more preferable that the pipe aperture is 10 to 30 mm, the hole diameter is 1 to 3 mm, the distance between the holes is 3 to 8 mm.

### Embodiment 12: Example of using two application rollers, one pressing roller, and a cylindrical member

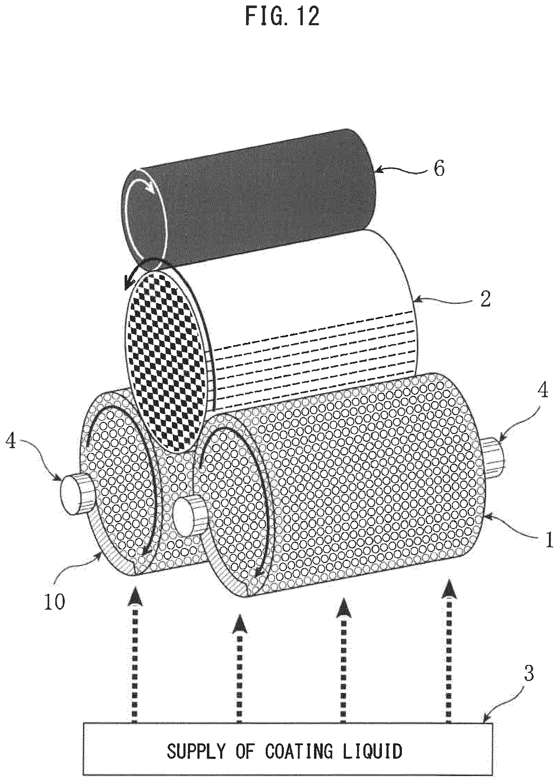

In this Embodiment 12 illustrated in the schematic diagram of Fig. 12, two application rollers (1) are used, and the honeycomb structure (2) is mounted between the application roller (1) and the drive roller (6), each of which being below the honeycomb structure (2). When the drive roller (6) above the honeycomb structure (2) presses down the honeycomb structure (2) to the application roller (1) thereunder, the adhering amount of the coating liquid increase.

Furthermore, the cylindrical member (4) has a function of squeezing the coating liquid from the application roller (1), and may be fixed to the body of the application roller or may be rotatably mounted thereto; and one or two or more cylindrical members (4) may be used to one application roller; when two application rollers (1) are used, the cylindrical member (4) may be mounted to both of the two application rollers (1), or may be mounted to one thereof. The cylindrical member being pressured against the application roller and the drive roller causes the surfaces of the application roller and the drive roller to recess, thereby removing an excess amount of the coating liquid therefrom to be able to adjust the amount of the coating liquid applied.

The application roller (1) in Embodiment 12 may be a drive and application roller. The drive roller (6) above the honeycomb structure (2) may be a roller having no driving function, that is, an idling roller, and may also be a roller covered with an elastic body so that the roller will not damage the honeycomb structure (2).

The present invention is not interpreted limited to the above-described embodiments, and as far as it does not deviate from the scope the present invention, it is possible to add thereto various types of change, modification, or improvement that are available in this technical field.

### 3. Film-coated cylindrical honeycomb structure

The film-coated cylindrical honeycomb structure in the present invention is a cylindrical honeycomb structure having a film formed on at least part of an outer portion of the cylindrical honeycomb structure by applying a coating liquid.

The honeycomb structure is able to have a film on the whole surface of the outer portion thereof, and at least part of the film is included inside the macro pore passing through an outer wall.

While the film of an organic-based material on the surface of outer portion is not limited in thickness, the thickness is preferably 0.1 mm or smaller. If the film is excessively thick, in a firing process to carry a catalyst into the honeycomb structure, the material remains to degrade the surface condition. When the film is formed, slurry containing a catalyst component is included inside the macro pore passing through the outer wall. In this case, when the material overflows inside the cell to cover the inner wall, it makes it difficult to carry the catalyst. On the other hand, the film needs to have a thickness such that the liquid containing the catalyst component does not easily leach out to the periphery even though the amount of the organic material included inside the macro pore is reduced, and a crack will not occur due to the catalyst component entering the outer portion.

In the present invention, it is preferable that the outer surface of the honeycomb structure has a thin film made of an organic material evenly formed thereon. If the film has an uneven portion that is too thin, in some cases, the amount of the organic material included in the macro pore becomes insufficient and the slurry may leach out from the inside; and if the film has a portion that is too thick, in some cases, the resin remains thereon after firing, thereby degrading the appearance.

In the film, the organic resin that is a main component thereof disappears by being fired during the catalyst production, thereby making the pore permeable as it was, thus having no disadvantageous effect on the flow out of exhaust gas from the outer portion, which is performed with the catalyst.

### 4. Production of exhaust gas purification catalyst for gasoline-powered cars

The film-coated honeycomb structure (also referred to as "honeycomb filter") of the present invention is suitably used for a catalyst support for an exhaust gas purification catalyst for vehicles.

In the exhaust gas purification catalyst for gasoline-powered cars, for example, inside the cell of the honeycomb structure catalyst support, the three-way catalyst (TWC) to remove NOx, CO, hydrocarbon is carried. The three-way catalyst (TWC) is an exhaust gas purification catalyst in which inorganic oxide particles carry active components mainly including noble metals such as platinum, palladium, and rhodium, hydrocarbon contained in exhaust gases is oxidized to provide water and carbon dioxide, carbon monoxide is oxidized to provide carbon dioxide, and nitrogen oxide is reduced to provide nitrogen, and thus the exhaust gases are purified at a time. A composition including such a catalyst component is made a slurry, and the film-coated honeycomb structure of the present invention is coated with the composition slurry with a wash coating method of drying and firing, thereby making it possible to carry the catalyst component.

In the wash coating method, in some cases, with the periphery of the honeycomb filter catalyst support being held by an elastic body holder (also referred to as "balloon"), slurry containing the catalyst component of three-way catalyst (TWC) is supplied to the inside the cell to coat the inner wall of the cell therewith to carry. Exhaust gas flow rate with the diesel particulate filter (DPF) catalyst is not so high, and a material having a dense structure, which differs from the material of the filter cell, is used for the outer portion, so as to improve the mechanical strength of the honeycomb structure. Consequently, the problem with leaching out of slurry liquid or bonding of the slurry liquid to a balloon does not occur, which is a problem to be solved in the present invention.

In the GPF, however, to remove fine particulate substances included in exhaust gases of gasoline-powered cars, a honeycomb filter is used, and an outer wall (portion) of a cell has a plurality of macro pores, some of which communicate to the outside from the inside of the cell. From a portion including such macro pore, the slurry liquid easily leaches out through a clearance in the outer portion. The present invention uses the above-described film-coated cylindrical honeycomb structure, which makes it difficult for a liquid containing a catalyst component to leach out to the periphery of the honeycomb structure in a process of coating the inside of the cell with the catalyst component of the three-way catalyst (TWC), prevents the bonding of the liquid containing a sticky component to the elastic body holder, thereby preventing a trouble during detachment of the elastic body holder. Such macro pore in the outer portion of the GPF may cause a crack thereon due to exhaust gas from a gasoline engine, which has a higher temperature than a diesel engine, and to prevent the occurrence of the crack, the cell wall and the outer portion are sometimes formed of materials having the same thermal expansion ratio, and thus the outer portion is formed of a porous material having permeability as is the case with the cell wall.

A noble metal is carried on a particle such as alumina, to be carried on the honeycomb structure in a form of one or two layers with slurry containing the particle. The granularity of the slurry is preferably small, preferably 90% of the slurry having particles of 5 µm or smaller, more preferably having particles crushed to 3 µm or smaller. The amount of the three-way catalyst (TWC) is preferably within a range of 40 to 150 g/L, which is the amount of TWC coated per volume of 1L of the honeycomb structure, more preferably within a range of 50 to 100 g/L.

In addition to the above, oxides including elements such as zirconia, ceria, La, Nd, and Pr, or other substance may be blended, as a component to improve thermal resistance or a component to storage and release oxygen.

The component of the slurry includes a sticky substance to make the catalyst material easier to be adhered to the inside the cell, which also causes the catalyst material to be bonded to a balloon that is used to hold the honeycomb structure in the wash coating method. The film-coated cylindrical honeycomb structure produced in the present invention is able to prevent such bonding.

A honeycomb structure type catalyst obtained by wash coating, drying, and firing a catalyst with the film-coated cylindrical honeycomb structure obtained by the present invention is able to prevent the occurrence of a crack caused during catalyst production or caused partly due to heat history during driving of a vehicle.

### Industrial Applicability

The film-coated honeycomb structure produced by a method of the present invention is able to be used as a catalyst support of an exhaust gas purification catalyst for gasoline-powered cars (GPF) that does not cause the back pressure of exhaust gas to increase.

### Description of Reference Signs

1 drive and application roller, 2 film-coated cylindrical honeycomb structure, 3 liquid bath, 4 cylindrical member, 5 application roller, 6 drive roller, 7 pipe-like core, 8 rib, 9 hole

## Claims

1. A method of producing a film-coated cylindrical honeycomb structure by forming a film with a coating liquid on an outer portion of a cylindrical honeycomb structure including partition walls and the outer portion, the partition walls forming a plurality of cells, the outer portion serving as a circumferential side, the method comprising:
mounting the cylindrical honeycomb structure between at least two rollers such that the circumferential side of the cylindrical honeycomb structure contacts with circumferential sides of the rollers, depositing the coating liquid supplied from an application part of the rollers on the cylindrical honeycomb structure while being rotated, and then drying or curing the deposited coating liquid to form the film on the outer portion.

2. The method of producing the film-coated cylindrical honeycomb structure according to claim 1, wherein the partition walls and the outer portion are formed of same material and the outer portion has permeability.

3. The method of producing the film-coated cylindrical honeycomb structure according to claim 1 or 2, wherein the cylindrical honeycomb structure includes a plurality of channels defined by the cells each running from one opening end that is an inlet to another opening end that is an outlet, the cylindrical honeycomb structure serving as a wall-flow honeycomb in which the inlet and the outlet of each of the cells are alternately plugged on the opening ends.

4. The method of producing the film-coated cylindrical honeycomb structure according to any one of claims 1 to 3, wherein the coating liquid contains polyvinyl alcohol as a resin component.

5. The method of producing the film-coated cylindrical honeycomb structure according to any one of claims 1 to 4, wherein the resin component is dispersed or dissolved in water.

6. The method of producing the film-coated cylindrical honeycomb structure according to any one of claims 1 to 5, wherein at least one of the rollers has an outermost surface formed of a sponge-like material.

7. The method of producing the film-coated cylindrical honeycomb structure according to any one of claims 1 to 6, wherein at least one of the rollers is a drive and application roller having both a drive function and an application function.

8. The method of producing the film-coated cylindrical honeycomb structure according to any one of claims 1 to 7, wherein the drive and application roller or an application roller is soaked in a coating liquid contained in a container to thereby supply the coating liquid to the application part of the roller.

9. The method of producing the film-coated cylindrical honeycomb structure according to any one of claims 1 to 8, wherein the drive and application roller or an application roller introduces a coating liquid from a hollow pipe-like core thereof to supply the coating liquid to a circumferential side of the application part of the roller through a hole on a side surface of the pipe.

10. The method of producing the film-coated cylindrical honeycomb structure according to any one of claims 1 to 9, wherein a member to remove an excess of the coating liquid with which the roller is impregnated is abutted against the drive and application roller or an application roller.

11. The method of producing the film-coated cylindrical honeycomb structure according to any one of claims 1 to 10, wherein at least one of the rollers is a drive roller to rotate the cylindrical honeycomb structure, and another of the rollers is an application roller.

12. The method of producing the film-coated cylindrical honeycomb structure according to claim 11, wherein the application roller is arranged above the cylindrical honeycomb structure.

13. The method of producing the film-coated cylindrical honeycomb structure according to claim 11 or 12, wherein the drive roller has a rib in a circumferential direction thereof.

14. The method of producing the film-coated cylindrical honeycomb structure according to claim 13, wherein the rib is formed in a spiral shape.

15. The method of producing the film-coated cylindrical honeycomb structure according to any one of claims 1 to 14, wherein the drive and application roller or an application roller has a length shorter than a length of the honeycomb structure.

16. The method of producing the film-coated cylindrical honeycomb structure according to any one of claims 1 to 14, wherein the drive and application roller or an application roller has a length longer than a length of the honeycomb structure.

17. The method of producing the film-coated cylindrical honeycomb structure according to any one of claims 1 to 16, wherein the drive and application roller or an application roller has a diameter larger than a diameter of the honeycomb structure.

18. A method of producing an exhaust gas purification catalyst for gasoline-powered cars, the method comprising:
by using the film-coated cylindrical honeycomb structure as claimed in any one of claims 1 to 17, coating catalyst slurry on an inner surface of the honeycomb structure cell by the wash coating method, and then drying and firing the catalyst slurry, so that the catalyst component is carried thereon.
